# EUROPÄISCHE PATENTSCHRIFT

(11) **EP 2 836 885 B1**
(45) Veröffentlichungstag und Bekanntmachung des Hinweises auf die Patenterteilung: **24.07.2019**
(21) Anmeldenummer: 13730826.8
(22) Anmeldetag: 06.06.2013
(51) Int. Cl.: H02J 5/00, H02J 7/00, H04W 12/02, H04W 12/04, G06F 1/16, H04B 5/00, H02J 7/02

(54) **DOCKINGSTATION FÜR EINE KABELLOSE ENERGIE- UND DATENANBINDUNG**
DOCKING STATION FOR WIRELESS TRANSFER OF ENERGY AND DATA
STATION D'ACCUEIL POUR LE TRANSFERT SANS FIL DE L'ÉNERGIE ET DE DONNÉES

(30) Priorität: 30.07.2012 DE 102012213363
(43) Veröffentlichungstag der Anmeldung: 18.02.2015
(73) Patentinhaber: Siemens Aktiengesellschaft, 80333 München (DE)
(72) Erfinder: KISZKA, Jan, 81735 München (DE)
(86) Internationale Anmeldenummer: PCT/EP2013/061687
(87) Internationale Veröffentlichungsnummer: WO 2014/019747

(56) Entgegenhaltungen:
- US-A1- 2010 146 308
- US-A1- 2012 032 632
- Ecma International: "ECMA-386 NFC-SEC-01: NFC-SEC Cryptography Standard using ECDH and AES", , 30. Juni 2010 (2010-06-30), Seiten 1-26, XP055077251, Gefunden im Internet: URL:http://www.ecma-international.org/publ ications/files/ECMA-ST/ECMA-386.pdf [gefunden am 2013-08-30]

## Beschreibung

Die vorliegende Erfindung betrifft eine Dockingstation zum Anschluss eines mobilen elektronischen Gerätes, ein Docking-System für einen Anschluss eines mobiles elektronisches Gerät an eine Dockingstation, sowie ein Verfahren zur Kopplung eines mobilen elektronischen Gerätes mit einer Dockingstation.

### Stand der Technik

Bei einer Vielzahl von elektronischen Geräten handelt es sich heutzutage um mobile elektronische Geräte. Diese mobilen elektronischen Geräte enthalten üblicherweise einen Energiespeicher, beispielsweise in Form einer wiederaufladbaren Batterie (Akkumulator). Somit können solche Geräte unabhängig von einem stationären Anschluss zur Energieversorgung räumlich flexibel eingesetzt werden.

Die Nutzungsdauer eines solchen mobilen elektronischen Geräts mit wiederaufladbaren Batterien ist dabei sehr stark von der Kapazität der Batterien abhängig. Spätestens wenn die in der Batterie gespeicherte Energie zur Neige geht, muss das elektronische Gerät wieder an eine stationäre Energieversorgung angeschlossen werden, um die Batterie aufzuladen und den weiteren Betrieb des Geräts zu ermöglichen.

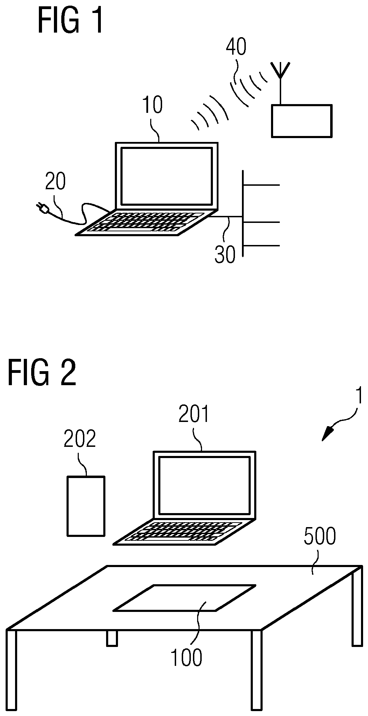

Wie in Fig. 1 dargestellt, ist es üblicherweise bis heute notwendig, dass das mobile elektronische Gerät 10 mittels einer Kabelverbindung 20 an eine Spannungsversorgung angeschlossen wird. Für diesen Anschluss ist ein Anschlusskabel mit geeigneten Steckverbindungen für das jeweilige elektronische Gerät erforderlich. Hat ein Benutzer dieses spezielle Anschlusskabel nicht zur Hand, so ist es ihm nicht möglich das elektronische Gerät an die Energieversorgung anzuschließen. Ein Weiterbetrieb und Aufladen der Batterie ist in diesem Fall nicht möglich.

Ein weiteres Problem der Verbindung eines mobilen elektronischen Geräts mit einem Anschlusskabels besteht darin, dass bei jedem Anschlussvorgang die Kontakte des elektronischen Gerätes und das Anschlusskabels mechanisch beansprucht werden. Nach einer Vielzahl von Anschlussvorgängen besteht daher die Gefahr, dass sich die Kontakte abnutzen oder beschädigt werden. Im Laufe der Zeit kann daher die Qualität der Kontaktierung zwischen Anschlusskabel und elektronischen Gerät beeinträchtigt werden.

Um eine möglichst komfortable und darüber hinaus auch mechanisch schonende Verbindung der mobilen Geräte während des Auflagevorgangs zu ermöglichen, wird für viele mobile Geräte eine sogenannte Docking-Stationen angeboten. Hierbei handelt es sich um eine Vorrichtung, in welche das mobile elektronische Gerät eingelegt werden kann. Beim Einlegen des Gerätes wird das Gerät dabei so geführt, dass die Anschlüsse des mobilen Gerätes eine sichere Verbindung mit den Anschlüssen in der Docking-Station bilden. Somit wird während des Verbindens und Lösens der Anschluss des elektronischen Gerätes geschont. Dennoch kann auf Dauer eine Beeinträchtigung der Kontakte nicht ausgeschlossen werden. Ferner sind solche Dockingstationen üblicherweise für einen ganz speziellen Gerätetyp ausgelegt. Ein Anschluss anders gestalteter Geräte über eine solche spezialisierte Dockingstation ist daher nicht möglich.

Darüber hinaus erfordern viele modernen elektronische Geräte eine Schnittstelle für einen Datenaustausch. Insbesondere mobile elektronische Geräte, wie beispielsweise tragbare Computer (Notebooks), Tablet-PCs oder Smartphones erfordern für ihren Betrieb eine Anbindung an ein Datennetzwerk.

Eine solche Netzwerkanbindung für den Datenaustausch kann über eine kabelgebundene Verbindung 30 erfolgen. Hierzu kann beispielsweise ein geeignetes Anschlusskabel, über das eine Netzwerkanbindung bereitgestellt werden kann, mit dem elektronischen Gerät verbunden werden. Da die Datenanbindung in diesem Fall über ein physikalisches Kabel erfolgt, kann auf diese Weise eine sehr sichere Anbindung mit einer relativ hohen Datenrate erzielt werden. Andererseits schränkt die mechanische Verbindung die Mobilität des elektronischen Gerätes sehr stark ein.

Alternativ kann insbesondere bei mobilen elektronischen Geräten auch eine Netzwerkanbindung über eine Funkverbindung 40 hergestellt werden. Beispielsweise sind hierbei Datenverbindungen über ein kabelloses Netzwerk (WLAN) oder eine Mobilfunkverbindungen (zum Beispiel GPRS, UMTS, LTE, etc.) möglich.

Bei solchen drahtlosen Datenübertragungen besteht allerdings die Möglichkeit, dass die Datenübertragung durch Dritte abgehört werden könnte. Daher wird die Datenübertragung in der Regel verschlüsselt erfolgen. In diesem Fall muss vor Beginn der Datenübertragung zwischen dem mobilen elektronischen Gerät und der Gegenstelle einen Schlüssel vereinbart werden, auf dem die Verschlüsselung der Datenübertragung basiert.

Ferner unterliegt die maximal zu erzielende Datenrate bei einer kabellosen Datenübertragung starken Einschränkungen. Solange sich nur eine geringe Anzahl von mobilen elektronischen Geräten eine gemeinsame Funkverbindung teilen, kann eine relativ gute Datenrate erzielt werden. Befinden sich jedoch zunehmend mehr elektronische Geräte innerhalb eines bestimmten Bereiches, so sinkt die zu erzielende maximale Datenrate sehr schnell. Dies führt zu sehr unbefriedigenden Netzwerkanbindung, da sich die Vielzahl von mobilen Geräten mit Funkverbindungen hierbei gegenseitig beeinflussen und somit behindern.

US 2012/032632 A1 offenbart Energie- und Datenübertragung unter Schlachtfeldbedingungen. Insbesondere wird induktive Übertragung von Energie und Daten durch keramische Panzertafeln an militärischen Fahrzeugen offenbart.

US 2010/146308 offenbart eine tragbare Energieversorgung für ein mobiles Berechnungsgerät. Dabei wird ein Gerät induktiv mit einem anderen Gerät verbunden, um Energie und/oder Daten zu übertragen. Die Übertragung von Daten erfolgt entweder über die induktive Verbindung oder eine separate Datenverbindung.

Der Standard "ECMA-386 NFC-SEC-01: NFC-SEC Cryptography Standard using ECDH and AES" spezifiziert kryptografische Mechanismen die das "Elliptic Curves Diffie-Hellman"-(ECDH)-Protokoll zur Schlüsselvereinbarung und den AES-Algorithmus zur Datenverschlüsselung und -integrität verwenden.

Es besteht daher ein Bedürfnis nach einem zuverlässigen und zugleich flexiblen Anschluss von mobilen elektronischen Geräten zu gleichzeitigen Energieversorgung und Datenanbindung.

### Zusammenfassung der Erfindung

Eine Idee der vorliegende Erfindung ist es, ein mobiles elektronisches Gerät in einem lokal begrenzten Bereich vollständig kontaktlos an eine Dockingstation anzubinden. Dabei erfolgt sowohl die Energieübertragung, als auch die Datenübertragung ohne mechanische Verbindung. Auf diese Weise benötigt der Benutzer keinerlei zusätzliche Kabel oder Steckverbindungen, die vergessen oder verloren werden könnten. Außerdem kann es aufgrund der kontaktlosen Anbindung auch zu keinerlei mechanischen Problemen, wie beispielsweise beschädigten oder verbogenen Kontaktstiften kommen.

Diese vollkommen kabellose Anbindung eines mobilen Gerätes an eine Dockingstation erfordert auch keinerlei spezielle Steckverbindungen, so dass sehr einfach eine Vielzahl von unterschiedlichen Gerätetypen an eine Solche Dockingstation angebunden werden können.

Ein weiterer Vorteil der Kombination einer gemeinsamen Energieübertragung und Datenanbindung in einer einzigen Dockingstation ergibt sich aus der Randbedingung, dass eine kabellose Energieübertragung nur über eine sehr begrenzte Reichweite möglich ist. Somit kann auch die Sendeleistung für die Datenübertragung auf diese begrenzte Reichweite eingeschränkt werden. Aufgrund dieser geringen Sendeleistung verringert sich auch die Gefahr einer gegenseitigen Störung und Beeinträchtigung benachbarter Funkverbindungen. Daraus resultiert eine besonders zuverlässige Datenanbindung mit hoher Datenrate.

Eine Ausführungsform der vorliegenden Erfindung besteht daher aus einer kabellose Dockingstation für ein mobiles elektronisches Gerät, die eine erste Datenübertragungseinrichtung und eine erste Energieübertragungseinrichtung umfasst. Die erste Datenübertragungseinrichtung ist dazu ausgelegt, eine kabellose Datenübertragung zwischen der Dockingstation und dem mobilen elektronischen Gerät auszuführen. Die erste Energieübertragungseinrichtung ist dazu ausgelegt eine kabellose Energieübertragung zwischen der Dockingstation und dem mobilen elektronischen Gerät auszuführen.

Die Erfindung umfasst ferner ein Verfahren zur Kopplung einer Dockingstation und eines mobilen elektronischen Gerätes mit folgenden Schritten: Detektion einer Annäherung des mobilen elektronischen Gerätes an die Dockingstation. Initialisierung einer kabellosen Energieübertragung von der Dockingstation an das mobile elektronische Gerät. Erzeugung von Schlüsseldaten für einen verschlüsselten Datenaustausch zwischen Dockingstation und mobilen elektronischen Gerät. Austausch der Schlüsseldaten zwischen Dockingstation und mobilem elektronischen Gerät zumindest teilweise unter Einbeziehung der kabellosen Energieübertragung von der Dockingstation an das mobile elektronische Gerät. Aufbau einer verschlüsselten Datenverbindung zwischen Dockingstation und mobilen elektronischen Gerät.

Vorzugsweise handelt es sich bei der kabellosen Energieübertragung zwischen der Dockingstation und dem mobilen elektronischen Gerät um eine induktive Energieübertragung. Bei einer solchen induktive Energieübertragung erfolgt die Energieübertragung mittels eines magnetischen Wechselfeldes. Da ein solches magnetisches Wechselfeld nahezu ungestört durch ein Kunststoffgehäuse eines Gerätes hindurch dringt, ist es für eine kabellose Energieübertragung sehr gut geeignet.

In einer Ausführungsform der Erfindung umfasst die Dockingstation einen Schlüsselgenerator zur Generierung von Schlüsseldaten. Die erste Datenübertragungseinrichtung ist dabei dazu ausgelegt, die Datenübertragung zwischen Dockingstation und dem mobilem elektronischem Gerät basierend auf den generierten Schlüsseldaten zu verschlüsseln. Somit kann mittels der in dem Schlüsselgenerator erzeugten Schlüsseldaten eine sehr sichere Datenverbindung zwischen Dockingstation und mobilem elektronischen Gerät aufgebaut werden.

In einer besonderen Ausführungsform ist die erste Datenübertragungseinrichtung in der Dockingstation dazu ausgelegt, die Sendeleistung der kabellosen Datenübertragung zu variieren und dabei die Sendeleistung auf einen vorbestimmten Wert zu begrenzen, bis ein vordefinierter Anmeldeprozess zwischen der Dockingstation und dem mobilem elektronischen Gerät abgeschlossen ist. Durch diese Begrenzung der Sendeleistung während des Anmeldeprozesses wird sichergestellt, dass sich das zu verbindende mobile elektronische Gerät in unmittelbarer Nähe der Dockingstation befindet. Somit wird anderen Geräten in einer größeren räumlichen Entfernung erschwert oder unmöglich gemacht die Datenübertragung während der Anmeldung abzuhören.

Vorzugsweise umfasst der vordefinierte Anmeldeprozess mindestens den Austausch von Schlüsseldaten. Somit sind diese sehr sensiblen Schlüsseldaten besonders geschützt.

In einer weiteren Ausgestaltungsform umfasst die Dockingstation ferner einen Modulator, der dazu ausgelegt ist die kabellose Energieübertragung zwischen der Dockingstation und dem mobilen elektronischen Gerät zu modulieren. Durch diese Modulation der Energieübertragung ist es zusätzlich möglich, auch über diesen Kanal der Energieübertragung Daten zwischen Dockingstation und mobilem elektronischen Gerät auszutauschen.

In einer weiteren Ausgestaltungsform umfasst die Dockingstation vorzugsweise ferner einen Schlüsselgenerator zur Generierung von Schlüsseldaten und die erste Datenübertragungseinrichtung ist dazu ausgelegt die Datenübertragung zwischen Dockingstation und dem mobilem elektronischem Gerät basierend auf den generierten Schlüsseldaten zu verschlüsseln; wobei die Modulation der Energieübertragung zwischen der Dockingstation und dem mobilen elektronischen Gerät zumindest teilweise auf den generierten Schlüsseldaten basiert. Somit werden die Schlüsseldaten von der Dockingstation an das jeweilige mobile elektronische Gerät durch eine besonders sichere Übertragung übermittelt.

In einer weiteren Ausführungsform umfasst die Dockingstation ferner einen Detektor, der dazu ausgelegt ist die kabellose Energieübertragung zwischen der Dockingstation und dem mobilen elektronischen Gerät zu überwachen. Vorzugsweise detektiert der Detektor eine Annäherung eines mobilen elektronischen Gerätes an die Dockingstation detektiert. Ein solcher Detektor ist in der Lage, ein sich annäherndes mobiles elektronisches Gerät zu erkennen, welches sich durch eine Energieabnahme aus dem bereitgestellten Energiefeld bemerkbar macht. Ferner kann der Detektor auch dazu verwendet werden, ein sich änderndes Verhalten in der Energieabnahme zu erkennen und daraufhin die Leistung der Energieübertragung anzupassen.

Gemäß einer Ausführungsform der Erfindung umfasst die Dockingstation ferner eine Kommunikationsschnittstelle, die dazu ausgelegt ist ein Signal bereitzustellen, das auf einer Datenübertragung der ersten Datenübertragungseinrichtung basiert. Eine solche Kommunikationsschnittstelle kann beispielsweise zu Anbindung einer externen Datenquelle wie zum Beispiel einer Festplatte oder ähnlichem verwendet werden. Ferner ist es über eine solche Schnittstelle auch möglich ein Audio- oder Videosignal an ein externes Gerät weiterzugeben.

In einer speziellen Ausführungsform stellt die Kommunikationsschnittstelle ein Ein- und Ausgabesignal bereit, dass auf einer bidirektionale Datenübertragung der ersten Datenübertragungseinrichtung basiert. Somit können über diese Kommunikationsschnittstelle Daten sowohl gesendet als auch empfangen werden.

Eine Ausführungsform der vorliegenden Erfindung umfasst ein kabelloses Docking-System mit einer oben beschriebenen Dockingstation und einem mobilen elektronischen Gerät mit einer zweiten Datenübertragungseinrichtung, die dazu ausgelegt ist die kabellose Datenübertragung mit der ersten Datenübertragungseinrichtung der Dockingstation auszuführen und eine zweite Energieübertragungseinrichtung, die dazu ausgelegt ist die kabellose Energieübertragung mit der ersten Energieübertragungseinrichtung der Dockingstation auszuführen.

In einer weiteren Ausführungsform umfasst das kabellose Docking-System der Erfindung ein mobiles elektronisches Gerät mit einem Demodulator, der dazu ausgelegt ist aus der kabellosen Energieübertragung ein Datensignal zu extrahieren. Aus diesem extrahierten Datensignal können zusätzliche, insbesondere vertrauliche Daten entnommen werden.

Gemäß einer speziellen Ausführungsform der Erfindung enthält das oben genannte extrahierte Datensignal Schlüsseldaten für eine verschlüsselte Übertragung zwischen erster Datenübertragungseinrichtung und zweiten Datenübertragungseinrichtung. Somit kann ein sehr zuverlässiger und sicherer Austausch dieser sensiblen Schlüsseldaten erfolgen.

### Beschreibung der Figuren

Verschiedene Ausgestaltungen der vorliegende Erfindung werden in Bezug auf die beiliegenden Zeichnungen genauer beschrieben. Hierbei zeigen:
- Fig. 1: eine schematische Darstellung eines Anschlusses eines elektronischen Gerätes bei stationärer Energieversorgung gemäß dem Stand der Technik;
- Fig. 2: eine schematische Darstellung eines Docking-Systems gemäß eine Ausführungsform der Erfindung;
- Fig. 3: eine schematische Darstellung einer Dockingstation und eines mobilen elektronischen Geräts gemäß einer Ausführungsform der Erfindung;
- Fig. 4: eine schematische Darstellung einer Dockingstation gemäß einer alternativen Ausführungsform; und
- Fig. 5: eine schematische Darstellung des Ablaufs eines Verbindungsaufbaus zwischen Dockingstation und mobilen elektronischen Gerät gemäß einer Ausführungsform dieser Erfindung.

Die nachfolgend beschriebenen Ausgestaltungen lassen sich, soweit sinnvoll, beliebig miteinander kombinieren. Zusätzliche Ausgestaltungen und Implementierungen der Erfindung umfassen auch nicht ausdrücklich in Ausführungsbeispielen beschriebene Kombinationen von Merkmalen, insofern diese Kombinationen in den beigefügten Patentansprüchen angegeben sind.

Die beigefügten Zeichnungen dienen dabei dem Verständnis der Ausführungsformen der Erfindung. Sie veranschaulichen die beschriebenen Ausführungsformen und dienen im Zusammenhang mit der Beschreibung der Erläuterung von Prinzipkonzepten der Erfindung. Die Elemente der Zeichnungen sind dabei nicht immer maßstabsgetreu zueinander gezeichnet. Gleiche Bezugszeichen bezeichnen dabei gleiche oder ähnlich wirkende Komponenten.

### Ausführliche Beschreibung der Erfindung

Ein mobiles elektronisches Gerät im Sinne der folgenden Beschreibung umfasst zunächst alle beweglichen Geräte, zu deren Betrieb elektrischer Energie erforderlich ist. Diese elektrische Energie wird üblicherweise mittels einer wiederaufladbaren Batterie, einem so genannten Akkumulatoren (Akku), bereit gestellt. Somit kann gewährleistet werden, dass das mobile Gerät keine permanente kabelgebundene Anbindung an eine Energieversorgung benötigt.

Darüber hinaus richtet sich diese Erfindung insbesondere an elektronische Geräte, die auch eine Kommunikationsschnittstelle für einen Datenaustausch besitzen. Beispielsweise kann es sich dabei um eine kabellose Netzwerkanbindung handeln.

Fig. 2 zeigt eine schematische Darstellung eines erfindungsgemäßen Docking-Systems 1. Das Docking-System 1 umfasst dabei eine Dockingstation 100 und ein mobiles elektronisches Gerät, wie beispielsweise ein Notebook 201 oder einen Tablet-PC 202. Ebenso können andere mobile elektronische Geräte, wie beispielsweise ein Mobiltelefon, insbesondere ein Smartphone, oder Ähnliches mit der Dockingstation 100 verbunden werden.

Die Dockingstation 100 unterscheidet sich von der Fig. 1 dargestellten Energieversorgung und Netzwerkanbindung dadurch, dass sowohl Energieversorgung als auch Datenübertragung vollständig kabellos erfolgen. Zwischen der Dockingstation 100 und den mobilen elektronischen Geräten 201 oder 202 bestehen also keinerlei mechanische Verbindungen.

Die Dockingstation 100 kann dabei, wie in Fig. 2 dargestellt, in ein Möbelstück, beispielsweise einen Schreibtisch 500 integriert sein. Alternativ ist das jedoch ebenso möglich, die Dockingstation 100 als separates Gerät auszuführen und beispielsweise in einen flache Matte, wie eine Schreibtischauflage oder Ähnliches, zu integrieren.

Um ein mobiles elektronisches Gerät 201 oder 202 mit der Dockingstation 100 zu verbinden, ist es dabei lediglich erforderlich, das entsprechende Gerät 201 oder 202 in der Nähe der Dockingstation 100 zu positionieren. Aufgrund der kabellosen Kommunikation zwischen Dockingstation 100 und mobilen Gerät 201 oder 202, wird das mobile Gerät von der Dockingstation automatisch erkannt und eine sichere Energie- und Datenverbindungen hergestellt. Der detaillierte Verbindungsaufbau beim Annähern eines mobilen Gerätes eine Dockingstation 100 wird weiter unten noch genauer beschrieben.

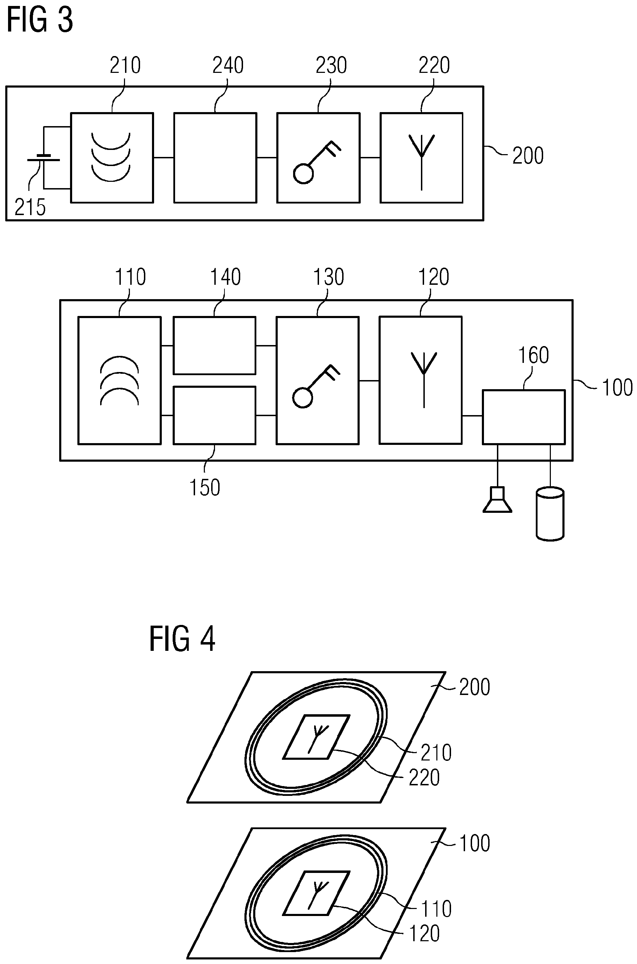

Fig. 3 zeigt den detaillierten Aufbau einer Dockingstation 100 und eines mobilen elektronischen Gerätes 200 gemäß einer Ausführungsform der Erfindung. Die Dockingstation 100 umfasst dabei eine erste Energieübertragungseinrichtung 110 und eine erste Datenübertragungseinrichtung 120. Entsprechend umfasst das mobile elektronische Gerät 200 eine zweite Energieübertragungseinrichtung 210 und eine zweite Datenübertragungseinrichtung 220.

Die erste Energieübertragungseinrichtung 110 der Dockingstation 100 erzeugt dabei ein Energiefeld. Dieses Energiefeld ist vorzugsweise in Richtung des mobilen elektronischen Geräts 200 ausgerichtet. Beispielsweise kann es sich bei diesem Energiefeld um ein magnetisches Wechselfeld handeln. In diesem Fall handelt es sich bei der Energieübertragung um eine induktive Kopplung. Grundsätzlich sind jedoch auch andere Energiefelder, wie beispielsweise elektromagnetische Felder oder Ähnliches möglich, soweit sie dazu geeignet sind, die erforderliche Energiemenge von der Dockingstation 100 an das mobile elektronische Gerät 200 zu übertragen.

Die zweite Energieübertragungseinrichtung 210 des mobilen elektronischen Geräts 200 empfängt das Energiefeld und wandelt die empfangene Energie in elektrische Energie um. Diese elektrische Energie kann direkt zum Betrieb des Geräts 200 verwendet werden. Alternativ oder zusätzlich kann mit der elektrischen Energie aus der Energieübertragungseinrichtung 210 auch einen Energiespeicher 215 aufgeladen werden. Bei dem Energiespeicher kann es sich beispielsweise um eine wiederaufladbare Batterie handeln.

Wird beispielsweise die Energie von der ersten Energieübertragungseinrichtung 110 über eine induktive Kopplung mittels eines magnetischen Wechselfelds übertragen, so kann dieses magnetischen Feld in der zweiten Energieübertragungseinrichtung 210 des mobilen elektronischen Geräts 200 eine Spannung induzieren. Die induzierte Spannung kann daraufhin zu Energieversorgung des mobilen elektronischen Geräts 200 und/oder dem Aufladen des Akkumulators 215 verwendet werden.

Weiterhin umfasst die Dockingstation 100 eine erste Datenübertragungseinrichtung 120 und das mobile elektronische Gerät 200 umfasst eine zweite Datenübertragungseinrichtung 220. Hiermit kann zwischen der Dockingstation 110 und dem mobilen elektronischen Gerät 200 ein kabelloser Datenaustausch erfolgen.

Für den kabellosen Datenaustausch zwischen Dockingstation 100 und dem mobilen Gerät 200 kann grundsätzlich ein bereits bekanntes kabelloses Datenübertragungsverfahren verwendet werden. Beispielsweise kann hierzu eine aus dem IEEE-Standard 802 bekannte Funk-Datenübertragung verwendet werden. Eine solche kabellose Datenübertragung ist unter dem Begriff Wireless LAN (WLAN) bekannt. Andere Funk-Datenübertragungsverfahren sind jedoch ebenso geeignet.

Da die Reichweite für eine kabellose Energieübertragung zwischen der Dockingstation 100 und mobilen Gerät 200 begrenzt ist, kann für die Datenübertragung zwischen erster und zweiter Datenübertragungseinrichtung 120 und 220 die Reichweite entsprechend angepasst werden und eine Funkverbindung mit einer relativ geringen Sendeleistung verwendet werden.

Diese Begrenzung der Sendeleistung auf einen relativ geringen maximalen Pegel verringert dabei vorteilhafter Weise gleichzeitig eine gegenseitige Beeinträchtigung oder Störung benachbarter Funkzellen. Solche benachbarten Funkzellen können beispielsweise weitere Datenübertragungen mit anderen elektronischen Geräten ausführen. Somit kann gewährleistet werden, dass aufgrund der geringen gegenseitigen Beeinträchtigung eine sehr hohe Datenübertragungsrate erreicht werden kann. Außerdem ist durch die geringe Sendeleistung auch der gleichzeitige Betrieb einer relativ hohen Anzahl von Funkverbindungen möglich.

Kabellose Datenübertragungen bergen die Gefahr eines unerlaubten Abhörens. Um diese Gefahr auszuschließen oder zumindest zu reduzieren, werden kabellosen Datenübertragungen in der Regel verschlüsselt durchgeführt. Hierzu ist jedoch erforderlich, zunächst in den Sende- und Empfangsstationen einen gemeinsamen Schlüssel für die Verschlüsselung der Datenübertragung zu hinterlegen.

Um zwischen erster und zweiter Datenübertragungseinrichtung 120, 220 eine verschlüsselte Übertragung durchführen zu können, muss daher in der Dockingstation 100 und in dem mobilen elektronischen Geräts 200 ein gemeinsamer Schlüssel vorhanden sein. Hierzu können beispielsweise durch einen Schlüsselgenerator 130 in der Dockingstation 100 die erforderlichen Schlüsseldaten bereitgestellt werden.

Vorzugsweise werden bei jeder neuen Verbindung zwischen Dockingstation 100 und mobilem Gerät 200 jeweils neue Schlüsseldaten generiert. Diese neu erzeugten Schlüsseldaten müssen in diesem Fall während des Verbindungsaufbaus dem jeweiligen mobilen elektronischen Gerät 200 mitgeteilt werden.

Hierzu ist es möglich, die Sendeleistung für den Datenaustausch inzwischen Dockingstation 100 und mobilen elektronischen Geräts 200 so weit zu reduzieren, dass eine zuverlässige Kommunikation nur über eine minimale Distanz möglich ist.

Beispielsweise kann die Sendeleistung so weit reduziert werden, dass die zu übertragen Schlüsseldaten nur dann zuverlässig empfangen werden können, wenn sich Dockingstation 100 und das mobile Gerät 200 nahezu berühren oder nur wenige Zentimeter voneinander entfernt sind. Somit ist es einem weiter entfernt positionieren Empfänger nicht mehr möglich, unbemerkt diese Schlüsseldaten zu empfangen. Durch diese zwangsweise sehr nahe Anordnung kann auch sicher gestellt werden, dass jeweils das korrekte mobile Gerät 200 mit der Dockingstation 100 verbunden wird.

Nachdem die Schlüsseldaten ausgetauscht worden sind und die weitere Datenübertragung verschlüsselt erfolgt, kann daraufhin die Sendeleistung für die Datenübertragung erhöht werden, so dass sich das mobile elektronische Gerät 200 etwas weiter von der Dockingstation 100 entfernen werden kann und dennoch eine sichere Datenübertragung erfolgt.

Um die Sicherheit des Austausches der Schlüsseldaten zwischen Dockingstation 100 und mobilen Gerät 200 weiter zu erhöhen, werden die Schlüsseldaten nicht, oder zumindest nicht ausschließlich, über den Datenkanal zwischen erster und zweiter Datenübertragungseinrichtung 120, 220 ausgetauscht. Vielmehr wird zumindest ein Teil dieser Schlüsseldaten über die drahtlose Verbindung zwischen erster und zweiter Energieübertragungseinrichtung 110, 210 ausgetauscht.

Um auch eine Datenübertragung über die erste und zweite Energieübertragungseinrichtung 110, 210 durchführen zu können, wird das Energiefeld zwischen diesen beiden Energieübertragungseinrichtungen mittels eines Modulators 140 moduliert. Beispielsweise kann hierzu das Energiefeld mit einem höherfrequenten Signal überlagert werden. Andere Modulationsverfahren, die geeignet sind das entsprechende Energiefeld zu modulieren, sind ebenso möglich.

Während eines Verbindungsaufbaus oder immer dann wenn neue Schlüsseldaten zwischen Dockingstation 100 und mobilen Gerät 200 ausgetauscht werden sollen, wird der Modulator 140 von dem Schlüsselgenerator 130 die jeweils gültigen, neu erzeugten Schlüsseldaten erhalten und daraufhin das durch die erste Datenübertragungseinrichtung 110 erzeugte Energiefeld in geeigneter Weise modulieren.

Die zweite Energieübertragungseinrichtung 210 des mobilen Gerät 200 wird dieses modulierte Energiefeld empfangen. Ein Demodulator 240 wird die in dem Energiefeld eingebetteten Daten extrahieren und an einen Schlüsselspeicher 230 weiterleiten.

Die Schlüsseldaten, die durch den Schlüsselgenerator 130 erzeugt wurden, können dabei einerseits vollständig mithilfe des Modulator 140 und der ersten Energieübertragungseinrichtung 110 über das Energiefeld eine zweite Energieübertragungseinrichtung 210 übertragen und durch den Demodulator 240 extrahiert werden.

Alternativ können auch nur einige Teile der erzeugten Schlüsseldaten über das Energiefeld übertragen werden, während ein weiterer Teil der Schlüsseldaten zwischen der ersten und zweiten Datenübertragungseinrichtung 120, 220 ausgetauscht wird. Vorzugsweise wird dabei während der Datenübertragung zwischen den Datenübertragungseinrichtungen die Sendeleistung auf einen vorbestimmten, maximalen Wert beschränkt, um ein Abhören durch eine andere Stelle zu vermeiden.

Vorzugsweise erfolgt die Initiierung für die Erzeugung neuer Schlüsseldaten und der darauf folgende Austausch dieser Schlüsseldaten automatisch bei Annäherung eines mobilen elektronischen Gerätes 200 an die Dockingstation 100.

Die automatische Erkennung einer Annäherung eines mobilen elektronischen Gerätes 200, das dazu geeignet ist mit der Dockingstation 100 in Kontakt zu treten, kann beispielsweise durch die Überwachung des durch die erste Energieübertragungseinrichtung 110 bereitgestellten Energiefeldes erfolgen. Beispielsweise kann die erste Energieübertragungseinrichtung 110 kontinuierlich ein Energiefeld mit einer vorgegebenen Stärke bereitstellen. Solange kein geeignetes mobiles elektronisches Gerät 200 sich in unmittelbarer Nähe der Dockingstation 100 befindet, wird die erste Energieübertragungseinrichtung 110 keine Energieabnahme aus dem bereitgestellten Energiefeld registrieren.

Wird dagegen ein geeignetes mobiles elektronisches Gerät 200 in die Nähe der Dockingstation 100 gebracht, so kann die zweite Energieübertragungseinrichtung 210 des mobilen Geräts 200 Energie aus dem bereitgestellten Feld entnehmen. Diese Energieabnahme kann durch die erste Energieübertragungseinrichtung 110 registriert werden. Somit kann eine Annäherung eines geeigneten mobilen elektronischen Gerätes 200 registriert werden und daraufhin eine Verbindung zwischen Dockingstation 100 und mobilen elektronischen Gerät 200 hergestellt werden. Während dieses Verbindungsaufbaus können dabei auch durch den Schlüsselgenerator 130 geeignete Schlüsseldaten erzeugt werden. Diese Schlüsseldaten können daraufhin wie oben beschrieben zwischen Dockingstation 100 und mobilen Gerät 200 ausgetauscht werden.

Um die Sicherheit des Datenaustauschs zu Beginn einer neuen Verbindung noch weiter zu erhöhen und insbesondere um eine zusätzliche Sicherheit während des Austauschs der Schlüsseldaten zu gewährleisten, kann die Datenkommunikation über die erste und zweite Energieübertragungseinrichtung 110, 210 auch bidirektional erfolgen. Hierzu kann die zweite Energieübertragungseinrichtung 210 dahingehend erweitert werden, dass die Energieentnahme aus dem durch die Dockingstation 100 bereitgestellten Energiefeld entsprechend moduliert wird.

In diesem Fall registriert ein an die erste Energieübertragungseinrichtung 110 angeschlossener Detektor 150 eine Variation in dem bereitgestellten Energiefeld und wertet diese aus. Basierend auf dieser Variation des Energiefeldes erzeugt der Detektor Daten, die zur Weiterverarbeitung in der Dockingstation bereitgestellt werden. Insbesondere können diese Daten an den Schlüsselgenerator 130 weitergeleitet werden, der diese für die Erzeugung der Schlüsseldaten heranzieht. Somit kann eine zusätzliche Sicherheit bei der Vereinbarung eines gemeinsamen Schlüssels zwischen Dockingstation 100 und mobilen elektronischen Gerät 200 erreicht werden.

Nachdem der Anmeldevorgang und insbesondere der Schlüsseltausch abgeschlossen ist, geht die Dockingstation 100 in einen weiteren Betriebsmodus über. In diesem Betriebsmodus, in dem die Datenübertragung auf den zuvor übertragenen Schlüsseldaten erfolgt, kann beispielsweise die Sendeleistung zwischen der ersten und zweiten Datenübertragungseinrichtung 120 und 220 erhöht werden, wodurch das mobile elektronische Gerät 200 auch noch in einem etwas weiteren räumlichen Abstand zu der Dockingstation 100 einen zuverlässigen Datenaustausch mit entsprechend hohen Datenrate ausführen kann.

Ferner kann in diesem weiteren Betriebsmodus auch die Leistung der ersten Energieübertragungseinrichtung 110 an den Leistungsbedarf des gekoppelten mobilen elektronischen Gerätes 200 angepasst werden. So kann beispielsweise für ein Notebook mit entsprechend hohem Energiebedarf eine wesentlich höhere Leistung bereitgestellt werden, während für die Kopplung mit einem Smartphone oder Tablet-PC nur eine geringere Leistung durch die erste Energieübertragungsschnittstelle 110 bereitgestellt werden muss.

Hierzu kann beispielsweise durch die erste Energieübertragungsschnittstelle 110 die von dem mobilen Gerät 200 aus dem Energiefeld entnommene Leistung bestimmt werden und daraufhin eine Anpassung des bereitgestellten Energiefeldes vorgenommen werden.

Alternativ ist es ebenso möglich, dass während des Initialisierungsprozesses, in dem die Daten für den Schlüsselaustausch übertragen werden, auch gleichzeitig eine entsprechende Information über das zu koppelnde mobile elektronische Gerät 200 an die Dockingstation 100 übertragen wird. Daraufhin kann die Dockingstation 100 automatisch so konfiguriert werden, dass sie optimal an das zu koppelnde mobile Gerät 200 angepasst ist.

Diese automatische Anpassung der Dockingstation 200 kann neben der Anpassung der kabellos zu übertragenden Energie auch eine Anpassung der Datenschnittstelle 120 auf das entsprechende Protokoll und gegebenenfalls geeignetes Frequenzband umfassen. Ferner können während dieser Initialisierungsphase auch weiteren Daten für eine optimale Abstimmung zwischen Dockingstation 100 und mobilen Gerät 200 ausgetauscht werden.

Möchte ein Benutzer die automatische Anbindung eines mobilen Gerätes 200 an eine Dockingstation 100 unterbinden, so kann er dies relativ einfache dadurch verhindern, indem er die Schnittstellen 210 und 220 für die kabellose Kommunikation zur Dockingstation 100 deaktiviert. Dies kann beispielsweise durch einfaches Betätigen eines mechanischen Schaltelements an dem mobilen Gerät erfolgen. Alternativ ist ebenso eine entsprechende Softwareeinstellung im Menü des Geräts 200 möglich.

Der Datenaustausch zwischen der ersten Datenübertragungseinrichtung 120 der Dockingstation 100 und der zweiten Datenübertragungseinrichtung 220 des mobilen elektronischen Gerätes 200 dient in den meisten Fällen einer Netzwerkanbindung des mobilen elektronischen Geräts 200. Die Dockingstation 100 ist hierzu in der Regel über eine Kabelverbindung an ein lokales Netzwerk angebunden. Neben dem Zugriff auf ein lokales Netzwerk, kann hierüber auch beispielsweise ein Zugang zum Internet erfolgen.

Darüber hinaus ist es ebenso möglich, über die Datenverbindung zwischen erster und zweiter Datenübertragungseinrichtung 120, 220 noch weitere Daten zu übertragen. Insbesondere können über diese Datenverbindung beispielsweise spezielle Audio- und/oder Videodaten übertragen werden. Diese speziellen Audio- und/oder Videodaten können beispielsweise vor dem mobilen elektronischen Gerät 200 an die Dockingstation 100 gesendet werden und in einer hierfür geeigneten Ausgabeschnittstelle 160 in ein entsprechendes Audio- und/oder Videosignal umgewandelt werden. An die Schnittstelle 160 kann in diesem Fall beispielsweise ein Lautsprecher oder ein Audiogerät angeschlossen werden, über welches das Audiosignal ausgegeben werden kann. Ebenso kann im Falle eines Videosignals ein entsprechendes Videogerät, beispielsweise ein Projektor, ein großer Monitor oder ein anderes Grafikausgabegerät angeschlossen werden, über welches das Videosignal dargestellt werden kann.

Ferner kann Schnittstelle 160 der Dockingstation 100 auch einen Schnittstellenanschluss für ein externes Datengerät, beispielsweise einen Drucker, eine externe Festplatte, ein DVD-Laufwerk oder Ähnliches bereitstellen. Gegenwärtig existieren für solche Anschlüssen eine Vielzahl von unterschiedlichen Schnittstellen. So kann die Schnittstelle 160 beispielsweise als USB-Anschluss, als SATA-Anschluss, oder einen weiteren geeigneten Schnittstellenanschluss ausgeführt sein.

Die Schnittstelle 160 der Dockingstation 100 stellt hierfür einerseits die für den Anschluss des externen Datengeräts erforderliche Schnittstelle bereit. Darüber hinaus führt die Schnittstelle 160 eine geeignete Konvertierung der Ein- und Ausgabesignale durch und ermöglicht eine Weiterleitung der Daten über die erste und zweite Datenübertragungseinrichtung 120, 220 an das mobile elektronische Gerät 200 durch. Während die oben genannten Audio- und Videodaten in der Regel nur in einer Richtung, üblicherweise von mobilen Gerät 200 zur Ausgabe an die Dockingstation 100 weitergeleitet werden, erfolgt im Falle einer Anbindung eines Datengerätes (Festplatte, etc.) eine bidirektionale Datenübertragung zwischen Dockingstation 100 und mobilen Gerät 200.

In der in Fig. 3 dargestellten Ausführungsform der vorliegende Erfindung sind die erste Energieübertragungsschnittstelle 110 und die erste Datenübertragungseinrichtung 120 nebeneinander angeordnet. Eine solche Anordnung kann bezüglich einer möglichen gegenseitigen Beeinträchtigung der beiden Schnittstellen vorteilhaft sein.

Fig. 4 zeigt eine alternative Anordnung der ersten Energieübertragungseinrichtung 110 und der ersten Datenübertragungseinrichtung 120. Wie in dieser Abbildung dargestellt, sind die beiden Schnittstellen 110 und 120 hier ineinander angeordnet, so dass eine starke Verschränkung von Energiefeld und kabellosem Datensignal erfolgt. Weitere Anordnungen in der beiden Schnittstellen 110 und 120, bei denen die beiden Schnittstellen miteinander verschränkt sind, sind dabei ebenso möglich.

Eine solche räumliche Verknüpfung der beiden Schnittstellen ermöglicht eine noch engere Verbindung von kabelloser Energieversorgung und kabelloser Datenübertragung. Somit kann insbesondere bezüglich der Datensicherheit bei der Übertragung der Informationen zwischen Dockingstation 100 und mobilen Gerät 200 eine noch größere Sicherheit erzielt werden.

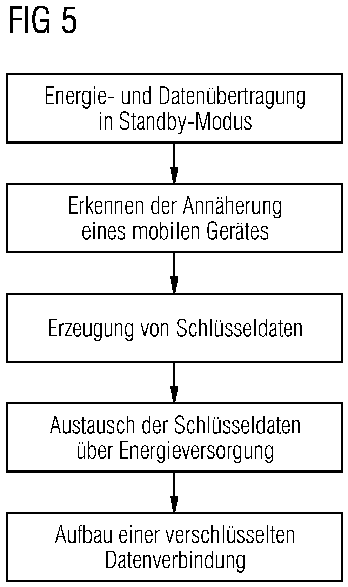

Fig. 5 zeigt ein Ablaufdiagramm für die Anbindung eines mobilen elektronischen Gerätes 200 an eine Dockingstation 100. Zu Beginn befindet sich die Dockingstation 100 in einem Bereitschaftsmodus. In diesem Standby-Zustand wartet die Dockingstation 100 auf die Annäherung eines mobilen elektronischen Gerätes 200. Hierbei kann die erste Energieübertragungseinrichtung 110 die Energieabgabe gegebenenfalls auf einem vorbestimmten Maximalwert begrenzen.

Zusätzlich oder alternativ kann auch die Sendeleistung der ersten Datenübertragungseinrichtung 120 auf einen vorbestimmten Maximalwert begrenzt werden. Ebenso ist es möglich, die Datenübertragungseinrichtung 120 zunächst vollständig deaktivieren und erst nach der Detektion einer Energieabgabe an ein mobiles elektronisches Gerät 200 die Datenübertragungseinrichtung 120 zu aktivieren.

Alternativ ist es ebenso möglich, zunächst die Energieübertragungsschnittstelle 110 zu deaktivieren und erst nach einer Verbindungsaufnahme der Datenübertragungseinrichtung 120 mit einem mobilen elektronischen Gerät 200 die Energieübertragung zu aktivieren.

Nachdem im nächsten Schritt die Dockingstation 100 die Annäherung eines mobilen elektronischen Gerätes 200 an die Dockingstation 100 registriert hat, beginnt der Schlüsselgenerator 130 mit der Erzeugung der Schlüsseldaten, die als Basis für die Verschlüsselung zwischen Dockingstation 100 und mobilen Gerät 200 dienen.

Anschließend erfolgt die Initialisierung des Verbindungsaufbaus zwischen Dockingstation 100 und mobilen Gerät 200. Hierzu werden auch die zuvor erzeugten Schlüsseldaten zwischen den beiden Geräten ausgetauscht. Bei Bedarf werden während dieser Initialisierungsphase darüber hinaus weitere Systemparameter, wie beispielsweise Leistungsbedarf des mobilen elektronischen Gerätes übertragen.

Nachdem die Initialisierung des Verbindungsaufbaus abgeschlossen ist, erfolgt zwischen der ersten Energieübertragungseinrichtung 110 in der Dockingstation 100 und der zweiten Energieübertragungseinrichtung 210 des mobilen Gerätes 200 eine kabellose Energieübertragung. Parallel dazu erfolgt zwischen der ersten Datenübertragungseinrichtung 120 der Dockingstation 100 und der zweiten Datenübertragung Schnittstelle 220 des mobilen Geräts 200 eine verschlüsselte Datenübertragung. Dabei wird die Sendeleistung zwischen den beiden Datenübertragungseinrichtungen 120 und 220 der Art angepasst, dass einerseits eine ausreichend stabile Datenübertragung zwischen den beiden Geräten erfolgen kann und andererseits die Sendeleistung dennoch möglichst gering, so dass eine möglichst geringe Beeinträchtigung räumlich benachbarter Geräte stattfindet.

Zusammenfassend betrifft die vorliegende Erfindung eine Dockingstation 100 für ein mobiles elektronisches Gerät 200. Die Energieversorgung und der Datenaustausch zwischen Dockingstation 100 und mobilen elektronischen Gerät 200 erfolgt dabei kabellos. Die kabellose Energieversorgung und die kabellose Datenanbindung sind dabei aufeinander abgestimmt. Der Initialisierungsprozess zu Anbindung des mobilen elektronischen Gerätes 200 an die Dockingstation erfolgt vorzugsweise vollautomatisch.

## Patentansprüche

1. Dockingstation (100) für ein mobiles elektronisches Gerät (200) umfassend:
eine erste Datenübertragungseinrichtung (120), die dazu ausgelegt ist eine kabellose Datenübertragung zwischen der Dockingstation (100) und dem mobilen elektronischen Gerät (200) auszuführen; und
eine erste Energieübertragungseinrichtung (110), die dazu ausgelegt ist eine kabellose Energieübertragung zwischen der Dockingstation (100) und dem mobilen elektronischen Gerät (200) auszuführen,
**dadurch gekennzeichnet, dass**
die erste Datenübertragungseinrichtung (120) dazu ausgelegt ist, eine Sendeleistung der kabellosen Datenübertragung zu variieren, und die Sendeleistung der kabellosen Datenübertragung lediglich auf einen vorbestimmten reduzierten Wert begrenzt wird, bis ein vordefinierter Anmeldeprozess zwischen der Dockingstation (100) und dem mobilem elektronischen Gerät (200) abgeschlossen ist.

2. Dockingstation (100) für ein mobiles elektronisches Gerät (200) nach Anspruch 1, wobei die kabellose Energieübertragung zwischen der Dockingstation (100) und dem mobilen elektronischen Gerät (200) eine induktive Energieübertragung ist.

3. Dockingstation (100) für ein mobiles elektronisches Gerät (200) nach Anspruch 1 oder 2, ferner umfassend
einen Schlüsselgenerator (130) zur Generierung von Schlüsseldaten;
wobei die erste Datenübertragungseinrichtung (120) dazu ausgelegt ist die Datenübertragung zwischen Dockingstation (100) und dem mobilem elektronischem Gerät (200) basierend auf den generierten Schlüsseldaten zu verschlüsseln.

4. Dockingstation (100) für ein mobiles elektronisches Gerät (200) nach einem der Ansprüche 1 oder 2, ferner umfassend einen Modulator (140), der dazu ausgelegt ist die kabellose Energieübertragung zwischen der Dockingstation (100) und dem mobilen elektronischen Gerät (200) zu modulieren.

5. Dockingstation (100) für ein mobiles elektronisches Gerät (200) nach Anspruch 4, ferner umfassend
einen Schlüsselgenerator (130) zur Generierung von Schlüsseldaten;
wobei die erste Datenübertragungseinrichtung (120) dazu ausgelegt ist die Datenübertragung zwischen Dockingstation (100) und dem mobilem elektronischem Gerät (200) basierend auf den generierten Schlüsseldaten zu verschlüsseln; und
wobei die Modulation der Energieübertragung zwischen der Dockingstation (100) und dem mobilen elektronischen Gerät (200) zumindest teilweise auf den generierten Schlüsseldaten basiert.

6. Dockingstation (100) für ein mobiles elektronisches Gerät (200) nach Anspruch 1, wobei der vordefinierte Anmeldeprozess mindestens den Austausch von Schlüsseldaten umfasst.

7. Dockingstation (100) für ein mobiles elektronisches Gerät (200) nach einem der vorherigen Ansprüche, ferner umfassend einen Detektor (150), der dazu ausgelegt ist, die kabellose Energieübertragung zwischen der Dockingstation (100) und dem mobilen elektronischen Gerät (200) zu überwachen.

8. Dockingstation (100) für ein mobiles elektronisches Gerät (200) nach Anspruch 7, wobei der Detektor (150) eine Annäherung eines mobilen elektronischen Gerätes (200) an die Dockingstation (100) detektiert.

9. Dockingstation (100) für ein mobiles elektronisches Gerät (200) nach einem der vorherigen Ansprüche, ferner umfassend eine Kommunikationsschnittstelle (160), die dazu ausgelegt ist ein Signal bereitzustellen, das auf einer Datenübertragung der ersten Datenübertragungseinrichtung (120) basiert.

10. Dockingstation (100) für ein mobiles elektronisches Gerät (200) nach Anspruch 9, wobei die Kommunikationsschnittstelle (160) ein Ein- und Ausgabesignal bereitstellt, das auf einer bidirektionale Datenübertragung der ersten Datenübertragungseinrichtung (120) basiert.

11. Kabelloses Docking-System (1) umfassend:
eine Dockingstation (100) nach einem der Ansprüche 1 bis 10; und
ein mobiles elektronisches Gerät (200) mit einer zweiten Datenübertragungseinrichtung (220), die dazu ausgelegt ist die kabellose Datenübertragung mit der ersten Datenübertragungseinrichtung (120) der Dockingstation (100) auszuführen und
eine zweite Energieübertragungseinrichtung (210), die dazu ausgelegt ist die kabellose Energieübertragung mit ersten Energieübertragungseinrichtung (110) der Dockingstation (100) auszuführen.

12. Kabelloses Docking-System (1) nach Anspruch 11, wobei die zweite Energieübertragungseinrichtung (210) des mobilen elektronischen Geräts (200) ferner einen Demodulator (240) umfasst, der dazu ausgelegt ist, aus der kabellosen Energieübertragung ein Datensignal zu extrahieren.

13. Kabelloses Dockingsystem (1) nach Anspruch 12, wobei das extrahierte Datensignal Schlüsseldaten für eine verschlüsselte Übertragung zwischen erster Datenübertragungseinrichtung (120) und zweiten Datenübertragungseinrichtung (220) enthält.

## Claims

1. Docking station (100) for a mobile electronic device (200), comprising:
a first data transmission device (120) which is designed to carry out wireless data transmission between the docking station (100) and the mobile electronic device (200); and
a first energy transmission device (110) which is designed to carry out wireless energy transmission between the docking station (100) and the mobile electronic device (200),
**characterized in that**
the first data transmission device (120) is designed to vary a transmission power of the wireless data transmission, and the transmission power of the wireless data transmission is only limited to a predetermined reduced value until a predefined registration process has been concluded between the docking station (100) and the mobile electronic device (200).

2. Docking station (100) for a mobile electronic device (200) according to Claim 1, the wireless energy transmission between the docking station (100) and the mobile electronic device (200) being inductive energy transmission.

3. Docking station (100) for a mobile electronic device (200) according to Claim 1 or 2, also comprising
a key generator (130) for generating key data;
the first data transmission device (120) being designed to encrypt the data transmission between the docking station (100) and the mobile electronic device (200) on the basis of the generated key data.

4. Docking station (100) for a mobile electronic device (200) according to either of Claims 1 and 2, also comprising a modulator (140) which is designed to modulate the wireless energy transmission between the docking station (100) and the mobile electronic device (200).

5. Docking station (100) for a mobile electronic device (100) according to Claim 4, also comprising
a key generator (130) for generating key data;
the first data transmission device (120) being designed to encrypt the data transmission between the docking station (100) and the mobile electronic device (200) on the basis of the generated key data; and
the modulation of the energy transmission between the docking station (100) and the mobile electronic device (200) being at least partially based on the generated key data.

6. Docking station (100) for a mobile electronic device (200) according to Claim 1, the predefined registration process comprising at least the interchange of key data.

7. Docking station (100) for a mobile electronic device (200) according to one of the preceding claims, also comprising a detector (150) which is designed to monitor the wireless energy transmission between the docking station (100) and the mobile electronic device (200).

8. Docking station (100) for a mobile electronic device (200) according to Claim 7, the detector (150) detecting when a mobile electronic device (200) approaches the docking station (100) .

9. Docking station (100) for a mobile electronic device (200) according to one of the preceding claims, also comprising a communication interface (160) which is designed to provide a signal based on data transmission by the first data transmission device (120).

10. Docking station (100) for a mobile electronic device (200) according to Claim 9, the communication interface (160) providing an input and output signal based on bidirectional data transmission by the first data transmission device (120).

11. Wireless docking system (1) comprising:
a docking station (100) according to one of Claims 1 to 10; and
a mobile electronic device (200) having a second data transmission device (220) which is designed to carry out the wireless data transmission with the first data transmission device (120) of the docking station (100), and a second energy transmission device (210) which is designed to carry out the wireless energy transmission with the first energy transmission device (110) of the docking station (100).

12. Wireless docking system (1) according to Claim 11, the second energy transmission device (210) of the mobile electronic device (200) also comprising a demodulator (240) which is designed to extract a data signal from the wireless energy transmission.

13. Wireless docking system (1) according to Claim 12, the extracted data signal containing key data for encrypted transmission between the first data transmission device (120) and the second data transmission device (220).

## Revendications

1. Station d'accueil (100) pour un appareil électronique mobile (200), comprenant :
un premier dispositif de transmission de données (120) qui est conçu pour exécuter une transmission de données sans fil entre la station d'accueil (100) et l'appareil électronique mobile (200) et
un premier dispositif de transmission d'énergie (110) qui est conçu pour exécuter une transmission d'énergie sans fil entre la station d'accueil (100) et l'appareil électronique mobile (200),
**caractérisée en ce que**
le premier dispositif de transmission de données (120) est conçu pour faire varier une puissance d'émission de la transmission de données sans fil et la puissance d'émission de la transmission de données sans fil est seulement limitée à une valeur réduite prédéterminée jusqu'à ce qu'un processus de connexion prédéfini entre la station d'accueil (100) et l'appareil électronique mobile (200) soit terminé.

2. Station d'accueil (100) pour un appareil électronique mobile (200) selon la revendication 1, la transmission d'énergie sans fil entre la station d'accueil (100) et l'appareil électronique mobile (200) étant une transmission d'énergie inductive.

3. Station d'accueil (100) pour un appareil électronique mobile (200) selon la revendication 1 ou 2, comprenant en outre un générateur de clés (130) pour générer des données de clés, le premier dispositif de transmission de données (120) étant conçu pour crypter la transmission de données entre la station d'accueil (100) et l'appareil électronique mobile (200) sur la base des données de clés générées.

4. Station d'accueil (100) pour un appareil électronique mobile (200) selon l'une des revendications 1 ou 2, comprenant en outre un modulateur (140) qui est conçu pour moduler la transmission d'énergie sans fil entre la station d'accueil (100) et l'appareil électronique mobile (200).

5. Station d'accueil (100) pour un appareil électronique mobile (200) selon la revendication 4, comprenant en outre un générateur de clés (130) pour générer des données de clés,
le premier dispositif de transmission de données (120) étant conçu pour crypter la transmission de données entre la station d'accueil (100) et l'appareil électronique mobile (200) sur la base des données de clés générées et
la modulation de la transmission d'énergie entre la station d'accueil (100) et l'appareil électronique mobile (200) étant basée au moins en partie sur les données de clés générées.

6. Station d'accueil (100) pour un appareil électronique mobile (200) selon la revendication 1, le processus de connexion prédéfini comprenant au moins un échange de données de clés.

7. Station d'accueil (100) pour un appareil électronique mobile (200) selon l'une des revendications précédentes, comprenant en outre un détecteur (150) qui est conçu pour surveiller la transmission d'énergie sans fil entre la station d'accueil (100) et l'appareil électronique mobile (200).

8. Station d'accueil (100) pour un appareil électronique mobile (200) selon la revendication 7, le détecteur (150) détectant qu'un appareil électronique mobile (200) s'approche de la station d'accueil (100).

9. Station d'accueil (100) pour un appareil électronique mobile (200) selon l'une des revendications précédentes, comprenant en outre une interface de communication (160) qui est conçue pour fournir un signal qui est basé sur une transmission de données du premier dispositif de transmission de données (120) .

10. Station d'accueil (100) pour un appareil électronique mobile (200) selon la revendication 9, l'interface de communication (160) fournissant un signal d'entrée et de sortie qui est basé sur une transmission de données bidirectionnelle du premier dispositif de transmission de données (120).

11. Système d'accueil sans fil (1) comprenant :
une station d'accueil (100) selon l'une des revendications 1 à 10
et
un appareil électronique mobile (200) avec un deuxième dispositif de transmission de données (220) qui est conçu pour exécuter la transmission de données sans fil avec le premier dispositif de transmission de données (120) de la station d'accueil (100) et un deuxième dispositif de transmission d'énergie (210) qui est conçu pour exécuter la transmission d'énergie sans fil avec le premier dispositif de transmission d'énergie (110) de la station d'accueil (100) .

12. Système d'accueil sans fil (1) selon la revendication 11, le deuxième dispositif de transmission d'énergie (210) de l'appareil électronique mobile (200) comprenant en outre un démodulateur (240) qui est conçu pour extraire un signal de données de la transmission d'énergie sans fil.

13. Système d'accueil sans fil (1) selon la revendication 12, le signal de données extrait contenant des données de clés pour une transmission cryptée entre le premier dispositif de transmission de données (120) et le deuxième dispositif de transmission de données (220).
